Europäisches Patentamt

European Patent Office

Office européen des brevets

(19)

(11) Numéro de publication : **0 384 179 B1**

# (12) FASCICULE DE BREVET EUROPEEN

(45) Date de publication du fascicule du brevet :
30.12.92 Bulletin 92/53

(51) Int. Cl.⁵ : **A47J 43/24**

(21) Numéro de dépôt : **90101999.2**

(22) Date de dépôt : **01.02.90**

(54) **Essoreuse.**

(30) Priorité : **24.02.89 FR 8902427**

(43) Date de publication de la demande :
**29.08.90 Bulletin 90/35**

(45) Mention de la délivrance du brevet :
**30.12.92 Bulletin 92/53**

(84) Etats contractants désignés :
**AT BE CH DE ES IT LI NL SE**

(56) Documents cités :
**FR-A- 2 187 262**
**FR-A- 2 528 684**

(73) Titulaire : **MOULINEX**
**11, rue Jules-Ferry**
**F-93170 Bagnolet (FR)**

(72) Inventeur : **Amiot, Jacques Henri Julien**
**c/o Moulinex, 25 Route de Mamers**
**F-61000 Alencon (FR)**
Inventeur : **Fourny, Jacky René Paul**
**c/o Moulinex, 25 Route de Mamers**
**F-61000 Alencon (FR)**

(74) Mandataire : **May, Hans Ulrich, Dr.**
**Patentanwalt Dr.H.U.May, Thierschstrasse 27**
**W-8000 München 22 (DE)**

## Description

L'invention a pour objet une essoreuse à usage ménager destinée, entre autre, à l'essorage de la salade sous l'effet de la force centrifuge.

L'invention concerne plus particulièrement les essoreuses à usage ménager comportant un récipient dont le fond présente un pivot central intérieur et dans lequel est monté rotatif un panier cylindrique perforé, dont le fond présente un logement central pour le pivot et dont le bord supérieur coopère avec un entraîneur, et un couvercle de fermeture du récipient comprenant une manivelle extérieure tournant dans un plan horizontal et qui, au moyen d'un jeu d'engrenages, entraîne en rotation ledit entraîneur.

Un tel appareil est notamment décrit dans FR-A-2187262.

Les essoreuses de ce type sont volumineuses. En effet, il est nécessaire d'avoir un volume interne assez important afin de pouvoir essorer efficacement une grande quantité de salade. Leur encombrement pose des problèmes pour le rangement, en particulier dans les cuisines qui sont souvent de petite taille.

L'invention a pour but de réaliser une essoreuse dont l'encombrement peut être réduit.

Selon la caractéristique principale de l'invention, l'essoreuse peut occuper deux volumes différents, soit un premier volume dit de fonctionnement pour lequel le couvercle est maintenu sur la partie haute du récipient et, le panier perforé étant composé de deux pièces concentriques, à savoir une couronne dont la partie haute constitue le bord supérieur du panier et une cuve dont la base constitue le fond du panier, la couronne et la cuve sont maintenues superposées par des moyens de fixation temporaire, soit un deuxième volume dit de rangement, pour lequel, d'une part, le couvercle et le récipient et, d'autre part, la couronne et la cuve sont emboîtés respectivement l'un dans l'autre. Grâce à cette réalisation, on peut diminuer le volume tout en conservant, d'une part en volume de fonctionnement, les propriétés d'étanchéité et de rigidité nécessaires à l'essorage centrifuge et, d'autre part en volume de rangement, un espace interne suffisant pour pouvoir y conserver un reste de salade dans le réfrigérateur, opération jusqu'alors difficile du fait de l'encombrement.

Les caractéristiques et avantages de l'invention ressortiront d'ailleurs de la description qui va suivre, à titre d'exemple, en référence aux dessins annexés dans lesquels :

la figure 1 représente en coupe verticale une essoreuse selon l'invention occupant son volume de fonctionnement ;

la figure 2 représente en coupe verticale l'essoreuse occupant son volume de rangement.

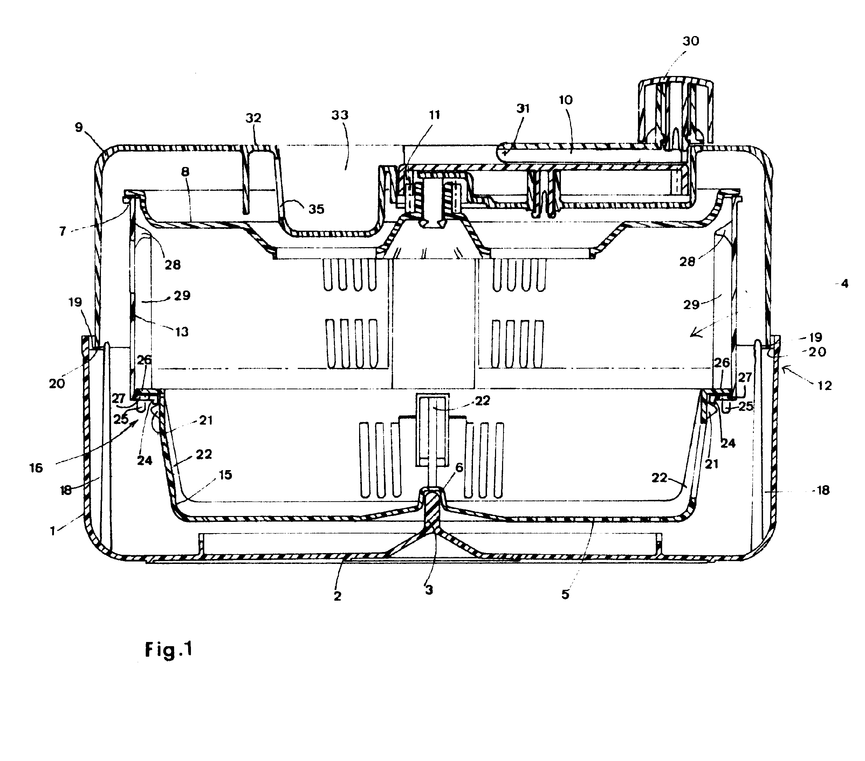

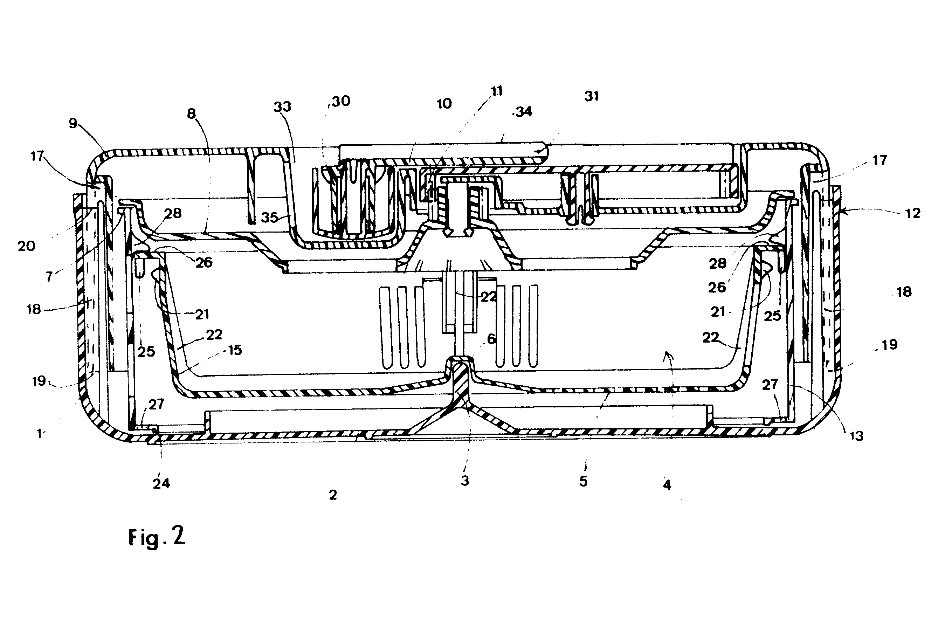

L'essoreuse représentée sur les figures 1 et 2 comporte un récipient 1 dont le fond 2 présente un pivot central 3 intérieur et dans lequel est monté rotatif un panier 4 cylindrique perforé dont le fond 5 présente un logement central 6 pour le pivot 3 et dont le bord supérieur 7 coopère avec un entraîneur 8, et un couvercle 9 de fermeture du récipient 1 comprenant une manivelle 10 extérieure tournant dans un plan horizontal et qui, au moyen d'un jeu d'engrenages 11, entraîne en rotation ledit entraîneur 8.

Selon l'invention l'essoreuse peut occuper deux volumes différents, soit un premier volume dit de fonctionnement (fig.1) pour lequel le couvercle 9 est maintenu sur la partie haute 12 du récipient 1 et, le panier perforé 4 étant composé de deux pièces concentriques, à savoir une couronne 13 dont la partie haute constitue le bord supérieur 7 du panier 4 et une cuve 15 dont la base constitue le fond 5 du panier 4, la couronne 13 et la cuve 15 sont maintenues superposées par des moyens de fixation temporaire 16, soit un deuxième volume dit de rangement (fig.2), pour lequel d'une part le couvercle 9 et le récipient 1 et d'autre part la couronne 13 et la cuve 15 sont emboîtés respectivement l'un dans l'autre.

On obtient ainsi une hauteur de rangement au moins une fois et demi plus petite que celle de fonctionnement.

Selon une caractéristique avantageuse de l'invention, le couvercle 9 et le récipient 1 présentant respectivement des encoches verticales 17 illustrées sur la fig. 2 (par exemple quatre encoches régulièrement espacées) et des nervures verticales 18 complémentaires, le couvercle 9 peut occuper deux positions, soit une première position dite de fonctionnement (fig.1) pour laquelle, les encoches 17 ne coïncidant pas avec les nervures 18, le bord inférieur 19 du couvercle 9 repose sur les arêtes supérieures 20 des nervures 18, soit une deuxième position dite de rangement (fig.2) en laquelle le couvercle 9 est amené par simple rotation (environ un huitième de tour) par rapport au récipient 1 et pour laquelle les encoches 17, coïncidant avec les nervures 18, autorisent le couvercle 9 à s'emboîter dans le récipient 1.

Selon une autre caractéristique de l'invention, les moyens de fixation temporaire 16 entre la couronne 13 et la cuve 15 sont constitués par des crans élastiques 21 (par exemple quatre crans portés en bout de nervures élastiques 22, régulièrement espacés) disposés dans la partie haute de la cuve 15 sur lesquels vient reposer une bordure 24 tournée vers l'intérieur solidaire de la périphérie inférieure de la couronne 13.

Les moyens de fixation temporaire 16 entre la couronne 13 et la cuve 15 doivent être agencés de manière que la couronne 13 et la cuve 15 ne puissent pas se désolidariser quand le panier 4 est posé en équilibre sur le pivot 3 du récipient 1, mais seulement quand le fond 5 de la cuve 15 est posée sur une surface plane, ceci afin d'éviter que les deux parties concentriques 13,15 du panier 4 ne s'emboîtent pendant l'essorage. Pour cela, des doigts de guidage 25 sont disposés avantageusement sous une collerette externe 26 solidaire de la périphérie supérieure de la cuve 15 et traversent, lors de la fixation de la couronne 13 sur la cuve 15, des ouvertures 27 pratiquées dans la bordure 24 de la couronne 13. En pratique, les doigts 25 sont disposés de part et d'autre de chaque cran élastique 21. Au moment de la désolidarisation de la cuve 15 et de la couronne 13, il faut que la pression sur la partie haute de la couronne 13 soit verticale , sinon les doigts 25 restent bloqués dans les ouvertures 27 de la bordure 24 de la couronne 13 maintenant ainsi la couronne 13 et la cuve 15 fixées entre elles.

La course verticale de l'emboîtement de la cuve 15 dans la couronne 13 est limitée d'une part, dans le bas par la bordure 24 de la couronne 13, et d'autre part, dans le haut par des ergots 28 disposés dans la partie haute de la couronne 13.

Des guides verticaux 29 disposés à l'intérieur de la couronne 13 empêchent également la cuve 15 de tourner dans la couronne 13 en position de rangement (fig.2).

Selon une autre caractéristique, la manivelle 10, comportant un bouton de préhension 30, peut occuper deux positions par basculement autour d'un axe horizontal 31, soit une position de fonctionnement (fig.1) pour laquelle le bouton 30 est tourné vers le haut et situé au dessus de la surface supérieure 32 du couvercle 9, soit une position de rangement (fig.2) pour laquelle le bouton 30 est tourné vers le bas et vient se placer dans un logement 33 ménagé dans le couvercle 9, la face 34 de la manivelle 10 tournée vers l'extérieur venant affleurer la surface supérieure 32 du couvercle 9.

Dans la position de fonctionnement (fig.1) de la manivelle 10, le logement 33 du couvercle 9 présentant un trou 35 peut être utilisé comme poignée pour soulever le couvercle 9.

Le mode d'utilisation de l'essoreuse selon l'invention va maintenant être décrit.
L'essoreuse occupant à l'état initial son volume de rangement (fig.2), on fait basculer la manivelle 10 autour de son axe horizontal 31 de façon à tourner le bouton 30 vers le haut. On enlève le couvercle 9 grâce au logement-poignée 33, 35, on attrape le panier 4 par la couronne 13 et, par simple pression de la main vers le bas dans le fond 5 de la cuve 15, la cuve 15 et la couronne 13 se fixent automatiquement grâce aux crans élastiques 21. Le panier 4 alors replacé dans le récipient 1 peut être rempli de salade. On pose le couvercle 9 sur les arêtes supérieures 20 des nervures 18 du récipient. Au cours de ce mouvement , l'entraîneur 8 et le bord supérieur 7 du panier 4 coopèrent au moyen de picots (non représentés) disposés à la périphérie de l'entraîneur et de rainures (non représentées) disposées sur le bord supérieur 7 du panier 4.
Le volume de fonctionnement (fig.1) étant atteint, pour essorer la salade, on fait tourner la manivelle 10 dans un plan horizontal.
Après essorage, on enlève le couvercle 9. Pour obtenir le repliement du panier 4 une fois vidé, on le pose sur une surface plane et par pression verticale en deux points diamétralement opposés de la partie haute de la couronne 13, la cuve 15 se désolidarise de la couronne 13 de façon à permettre l'emboîtement dans la couronne 13. Une fois le panier 4 replacé à l'intérieur du récipient 1, on ferme le récipient 1 avec le couvercle 9 en faisant coïncider les encoches 17 et les nervures 18 de manière qu'ils s'emboîtent l'un dans l'autre. Puis on fait basculer la manivelle 10 de façon à tourner le bouton 30 vers le bas.

**Revendications**

1. Essoreuse à usage ménager comportant un récipient (1) dont le fond (2) présente un pivot central(3) intérieur et dans lequel est monté rotatif un panier (4) cylindrique perforé dont le fond (5) présente un logement central (6) pour le pivot (3) et dont le bord supérieur (7) coopère avec un entraîneur (8), et un couvercle (9) de fermeture du récipient (1) comprenant une manivelle (10) extérieure tournant dans un plan horizontal et qui , au moyen d'un jeu d'engrenages (11), entraîne en rotation ledit entraîneur (8),
   **caractérisé en ce qu'**elle peut occuper deux volumes différents, soit un premier volume dit de fonctionnement pour lequel le couvercle (9) est maintenu sur la partie haute (12) du récipient (1), le panier perforé (4) étant composé de deux pièces concentriques, à savoir une couronne (13) dont la partie haute constitue le bord supérieur (7) du panier (4) et une cuve (15) dont la base constitue le fond (5) du panier (4), la couronne (13) et la cuve (15) étant maintenues superposées par des moyens de fixation temporaire (16), soit un deuxième volume dit de rangement, pour lequel, d'une part, le couvercle (9) et le récipient (1) et, d'autre part, la couronne (13) et la cuve (15) sont emboîtés respectivement l'un dans l'autre.

2. Essoreuse selon la revendication (1),
   **caractérisée en ce que** le couvercle (9) et le récipient 1 présentant respectivement des encoches verticales (17) et des nervures verticales (18) complémentaires, le couvercle (9) peut occuper deux positions, soit une première position dite de fonctionnement pour laquelle, les encoches (17) ne coïncidant pas avec les nervures (18), le bord inférieur (19) du couvercle (9) repose sur les arêtes supérieures (20) des nervures (18), soit une deuxième position dite de rangement en laquelle le couvercle (9) est amené par simple rotation par rapport au récipient (1) et pour laquelle les encoches (17), coïncidant avec les nervures (18), autorisent le couvercle (9) à s'emboîter dans le récipient (1).

3. Essoreuse selon la revendication (1) ou (2), **caractérisée en ce que** les moyens de fixation temporaire (16) entre la couronne (13) et la cuve (15) sont constitués par des crans élastiques (21) disposés dans la partie haute de la cuve (15) sur lesquels vient reposer une bordure (24) tournée vers l'intérieur solidaire de la périphérie inférieure de la couronne (13).

4. Essoreuse selon la revendication (3), **caractérisée en ce que** des doigts de guidage (25) sont disposés sous une collerette externe (26) solidaire de la périphérie supérieure de la cuve (15) et traversent, lors de la fixation de la couronne (13) sur la cuve (15), des ouvertures (27) pratiquées dans la bordure (24) de la couronne (13).

5. Essoreuse selon la revendication (3) ou (4), **caractérisée en ce que** la course verticale de l'emboîtement de la cuve (15) avec la couronne (13) est limitée d'une part, dans le bas par la bordure (24) de la couronne (13), et d'autre part, dans le haut par des ergots (28) disposés dans la partie supérieure de la couronne (13).

6. Essoreuse selon l'une quelconque des revendications précédentes, **caractérisée en ce que** la manivelle (10), comportant un bouton (30) de préhension, peut occuper deux positions par basculement autour d'un axe horizontal (31), soit une position de fonctionnement pour laquelle le bouton (30) est tourné vers le haut et situé au dessus de la surface supérieure (32) du couvercle (9), soit une position de rangement pour laquelle le bouton (30) est tourné vers le bas et vient se placer dans un logement (33) ménagé dans le couvercle (9), la face (34) de la manivelle (10) tournée vers l'extérieur venant affleurer la surface supérieure (32) du couvercle (9).

**Claims**

1. A drier for domestic use, comprising a receptacle (1) whose bottom (2) has an inner central pivot (3) and in which a perforate cylindrical basket (4) is rotatably mounted whose bottom (5) is formed with a central recess (6) for the pivot (3) and whose upper edge (7) cooperates with an entraining member (8), and a cover (9) for closing the receptacle (1) comprising an outer crank (10) which rotates in a horizontal plane and which via a train of gears (11) rotatably drives said entraining member (8), characterized in that the drier can occupy two different volumes, either a first volume known as the operating volume for which the cover (9) is retained on the top portion (12) of the receptacle (1), the perforate basket (4) being made up of two concentric members, i.e., a ring (13) whose top portion forms the upper edge (7) of the basket (4) and a basin (15) whose base forms the bottom (5) of the basket (4), the ring (13) and basin (15) being retained superimposed by temporary attaching means (16), or a second volume known as the storage volume for which on the one hand the cover (9) and the receptacle (1) and on the other hand the ring (13) and the basin (15) are respectively nested into one another.

2. A drier according to claim 1, characterized in that the cover (9) and the receptacle (1) are formed respectively with complementary vertical notches (17) and vertical ribs (18), the cover (9) being able to occupy two positions, either a first position known as the operating position for which the notches (17) do not coincide with the ribs (18) and the lower edge (19) of the cover (9) rests on the upper edges (20) of the ribs (18), or a second position known as the storage position in which the cover (9) is simply rotated in relation to the receptacle (1) and in which the notches (17) coincide with the ribs (18) and enable the cover (9) to be nested in the receptacle (1).

3. A drier according to claims 1 or 2, characterized in that the temporary attaching means (16) between the ring (13) and the basin (15) are formed by resilient catches (21) which are disposed in the top portion of the basin (15) and against which an inwardly turned border (24) bears which is connected to the lower periphery of the ring (13).

4. A drier according to claim 3, characterized in that guide fingers (25) are disposed beneath an outer flange (26) connected to the upper periphery of the basin (15), said guide fingers extending through openings (27) with which the border (24) of the ring (13) are formed when the ring (13) is attached to the basin (15).

5. A drier according to claims 3 or 4, characterized in that the vertical travel of the nesting of the basin (15) and the ring (13) is limited on one hand at the bottom by the border (24) of the ring (13) and on the other hand at the top by pins (28) disposed in the upper part of the ring (13).

6. A drier according to any of the preceding claims, characterized in that the crank (10), which comprises a gripping button (30), can occupy two positions by tilting around a horizontal axis (31), either an operational position for which the button (30) is turned upwards and located above the upper surface (32) of the cover (9), or a position of storage for which the button (30) is turned downwards and is received in a recess (33) with which the cover (9) is formed, the outwardly turned face (34) of the crank (10) being flush with the upper surface (32) of the cover (9).

## Patentansprüche

1. Trockenschleuder für Haushaltsgebrauch mit einem Gefäß (1), dessen Boden (2) einen inneren Mittelzapfen (3) aufweist und in dem ein gelochter zylindrischer Korb (4) drehbar gehalten ist, dessen Boden (5) einen Mittelsitz (6) für den Zapfen (3) aufweist und dessen oberer Rand (7) mit einem Antriebselement (8) zusammenwirkt, und mit einem Deckel (9) zum Verschließen des Gefäßes (1), der eine äußere Kurbel (10) aufweist, die sich in einer horizontalen Ebene dreht und mittels eines Getriebes (11) das Antriebselement (8) in Drehung versetzt, dadurch gekennzeichnet, daß sie zwei verschiedene Volumina einnehmen kann, nämlich ein erstes Volumen, das sogenannte Betriebsvolumen, bei welchem der Deckel (9) auf dem oberen Teil (12) des Gefäßes (1) gehalten ist, wobei der gelochte Korb (4) aus zwei konzentrischen Teilen besteht, nämlich einem Kranz (13), dessen oberer Teil den oberen Rand (7) des Korbes (4) bildet, und einer Schale (15), deren Basis den Boden (5) des Korbes (4) bildet, und der Kranz (13) und die Schale (15) durch eine Vorrichtung (16) zur vorübergehenden Befestigung übereinander gehalten sind, oder ein zweites Volumen, das sogenannte Abstellvolumen, in welchem einerseits der Deckel (9) und das Gefäß (1) und andererseits der Kranz (13) und die Schale (15) jeweils ineinandergeschoben sind.

2. Trockenschleuder nach Anspruch 1, dadurch gekennzeichnet, daß der Deckel (9) und das Gefäß (1) jeweils vertikale Nuten (17) und komplementäre vertikale Rippen (18) aufweisen und der Deckel (9) zwei Stellungen einnehmen kann, nämlich eine erste Stellung, die sogenannte Betriebsstellung, in welcher die Nuten (17) nicht mit den Rippen (18) zusammentreffen und der untere Rand (19) des Deckels (9) auf den oberen Kanten (20) der Rippen aufliegt, oder eine zweite Stellung, die sogenannte Abstell-Stellung, in welche der Deckel (9) durch einfäche Drehung bezüglich des Gefäßes (1) gebracht wird und in welcher die Nuten (17) mit den Rippen (18) zusammentreffen und das Einschieben des Deckels (9) in das Gefäß (1) ermöglichen.

3. Trockenschleuder nach Anspruch 1 oder 2, dadurch gekennzeichnet, daß die Vorrichtung (16) zur vorübergehenden Befestigung des Kranzes (13) an der Schale (15) aus elastischen Rasten (21) besteht, die im oberen Teil der Schale (15) angeordnet sind und auf denen eine fest mit dem unteren Umfang des Kranzes (13) verbundene, nach innen gerichtete Randleiste (24) zur Auflage kommt.

4. Trockenschleuder nach Anspruch 3, dadurch gekennzeichnet, daß Führungszapfen (25) unter einem mit dem oberen Umfang der Schale (15) fest verbundenem Außenkragen (26) angeordnet sind und bei der Befestigung des Kranzes (13) auf der Schale (15) Öffnungen (27) durchsetzen, die in der Randleiste (24) des Kranzes (13) ausgebildet sind.

5. Trockenschleuder nach Anspruch 3 oder 4, dadurch gekennzeichnet, daß die vertikale Einschubstrecke der Schale (15) in den Kranz (13) einerseits unten durch die Randleiste (24) des Kranzes (13) und andererseits oben durch im oberen Teil des Kranzes (13) angeordnete Zapfen (28) begrenzt ist.

6. Trockenschleuder nach einem der vorangehenden Ansprüche, dadurch gekennzeichnet, daß die einen Griffknopf (30) aufweisende Kurbel (10) durch Schwenkung um eine horizontale Achse (31) zwei Stellungen einnehmen kann, nämlich eine Betriebsstellung, in welcher der Griffknopf (30) nach oben gedreht und oberhalb der oberen Fläche (32) des Deckels (9) angeordnet ist, oder eine Abstell-Stellung, in welcher der Griffknopf (30) nach unten gedreht ist und in einem im Deckel (9) ausgebildeten Sitz (33) Platz findet, wobei die nach außen gedrehte Seite (34) der Kurbel (10) mit der oberen Fläche (32) des Deckels (9) fluchtet.

Fig.1

Fig. 2